(19) Europäisches Patentamt
European Patent Office
Office européen des brevets

(11) Veröffentlichungsnummer: **0 120 399**
**B1**

(12) # EUROPÄISCHE PATENTSCHRIFT

(45) Veröffentlichungstag der Patentschrift: **24.05.89**

(51) Int. Cl.⁴: **C 09 B 11/10**, C 09 B 11/24

(21) Anmeldenummer: **84102719.6**

(22) Anmeldetag: **13.03.84**

(54) **Verfahren zur Herstellung saurer, elektrolytarmer Farbstoffe der Triphenylmethan-Reihe.**

(30) Priorität: **18.03.83 DE 3309726**

(43) Veröffentlichungstag der Anmeldung: **03.10.84 Patentblatt 84/40**

(45) Bekanntmachung des Hinweises auf die Patenterteilung: **24.05.89 Patentblatt 89/21**

(84) Benannte Vertragsstaaten: **CH FR GB IT LI**

(56) Entgegenhaltungen:
**DE-C- 609 704**
**US-A- 2 337 425**

(73) Patentinhaber: **CASSELLA Aktiengesellschaft, Hanauer Landstrasse 526, D-6000 Frankfurt am Main 61 (DE)**

(72) Erfinder: **Engelmann, Axel, Dr., Loreleistrasse 46, D-6230 Frankfurt am Main 80 (DE)**

(74) Vertreter: **Urbach, Hans-Georg, Dr., Hanauer Landstrasse 526, D-6000 Frankfurt am Main 61 (DE)**

**EP 0 120 399 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung ist ein Verfahren zur Herstellung von wasserlöslichen, sauren, mindestens eine Sulfonsäuregruppe enthaltenden Farbstoffen der Triphenylmethan-Reihe in nahezu salzfreier Form.

Üblicherweise werden Triphenylmethanfarbstoffe in technischem Maßstab hergestellt durch Umsetzung der entsprechenden Leukoverbindungen in schwefelsaurer Lösung mit Oxidationsmitteln, wie beispielsweise Bichromat oder vorzugsweise aus Gründen der Arbeitshygiene Braunstein (Hans Beyer, Lehrbuch der organischen Chemie, Verlag Hirzel, Leipzig (1967), Seite 518). Die Farbstoffe werden aus wäßriger Lösung mit Ammonium-, Alkali- oder Erdalkalichloriden bzw. -sulfaten ausgesalzen. Sie fallen dabei mehr oder weniger salzhaltig zumeist als Harze an und sind als solche umständlich zu handhaben. Die noch tief gefärbten, stark salzhaltigen Mutterlaugen bedürfen weiterer chemischer Aufarbeitung, bevor sie entsorgt werden können. Um darüber hinaus die Farbstoffe weiter vom Salz zu befreien, sind zusätzliche Reinigungsschritte erforderlich. Diese können physikalischer (Membranfiltration) oder chemischer Art sein, wobei die ersteren meist keinen großen Materialdurchsatz in der Zeiteinheit erlauben, letztere mit mehr oder weniger großen Produktverlusten verbunden sind, je nach Löslichkeit der zugrunde liegenden Farbsäuren.

Aus der DE-C-609704 ist bereits die gute Wasserlöslichkeit der Farbstoff-Phosphorsäuresalze bekannt, die mit verschiedenen technischen Vorteilen verbunden ist.

Es wurde nun gefunden, daß man durch geeignete Wahl der bei der Oxidation der Leukoverbindungen mit Braunstein erforderlichen Mineralsäure sowie der geeigneten Base zum Lösen der Leukosäure eine nahezu salzfreie Lösung eines sauren Triphenylmethanfarbstoffes erhalten kann, aus der auf umweltfreundliche Weise durch Einengen der Farbstoff isoliert werden kann. Dabei fallen keine gefärbten Mutterlaugen mehr an.

Im einzelnen wurde gefunden, daß man elektrolytarme Triphenylmethanfarbstoffe der allgemeinen Formel (A)

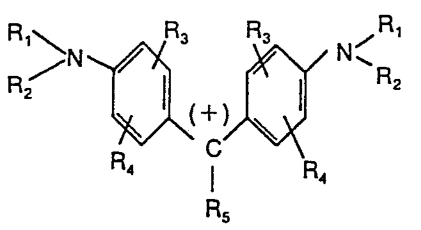

(A)

in welcher $R_1$ und $R_2$ je ein Wasserstoffatom oder eine Alkylgruppe von 1 bis 4 Kohlenstoffatomen, eine Benzyl- oder Sulfobenzylgruppe, $R_3$ und $R_4$ je ein Wasserstoffatom, eine Alkylgruppe von 1 bis 4 Kohlenstoffatomen oder eine Sulfonsäuregruppe, $R_5$ eine Phenyl-, Chlorphenyl-, Dialkylaminophenyl-, Alkyldialkylaminophenyl-, Alkoxyphenylaminophenyl-, Sulfanilido-, Sulfanilidophenyl-, Disulfobenzylaminophenyl-, Sulfophenyl-, Disulfophenyl-, Disulfohydroxyphenyl-, Sulfonaphthyl-, Disulfonaphthyl-, Hydroxidisulfonaphthyl-, Alkylphenylaminosulfonaphthyl-Gruppe bedeuten, mit der Maßgabe, daß das Farbstoffmolekül mindestens eine Sulfonsäuregruppe enthält, in Form ihrer Ammonium- oder Alkalimetallsalze herstellen kann, indem man die entsprechenden Leukoverbindungen der Farbstoffe der Formel (A) mit wäßriger Ammoniaklösung oder Gemischen aus wäßriger Ammoniaklösung und wäßriger Alkalimetallhydroxidlösung löst, anschließend

a) durch Zugabe von Phosphorsäure einen pH-Wert von 1–4,5 einstellt und dann eine wäßrige Anschlämmung von Braunstein zugibt, oder

b) zunächst eine wäßrige Anschlämmung von Braunstein zugibt und dann durch Zugabe von Phosphorsäure einen pH-Wert von 1–4,5 einstellt, oder

c) die Lösung der Leukoverbindungen zusammen mit einer wäßrigen Anschlämmung von Braunstein in vorgelegte Phosphorsäure einlaufen läßt,

wobei in jedem Fall das Ammoniak in mindestens äquimolarer Menge, bezogen auf den Braunstein, zugegen sein muß, anschließend die Leukoverbindungen bei Temperaturen zwischen 0 und 100 °C zu den entsprechenden Triphenylmethanfarbstoffen oxidiert, ausgefallenes Mangan-Ammoniumphosphat abfiltriert, gegebenenfalls mit Calciumhydroxid nachfällt und das Wasser abzieht.

Braunstein wird beim erfindungsgemäßen Verfahren, wie üblich, in einem molaren Überschuß, zweckmäßigerweise von etwa 20%, bezogen auf die zu oxidierende Leukoverbindung, eingesetzt.

Reagiert die zu oxidierende Leukoverbindung, beispielsweise durch den Gehalt von mehr als zwei Sulfonsäuregruppen im Molekül, in wäßriger Lösung bereits hinreichend sauer, so kann anstelle des getrennten Zusatzes von wäßriger Ammoniaklösung und Phosphorsäure Ammoniumdihydrogenphosphat zugegeben werden, wobei sich der gewünschte pH-Wert innerhalb des vorstehend genannten pH-Bereiches einstellt.

Die erfindungsgemäß erhältlichen elektrolytarmen violetten, blauen und grünen Farbstoffe sind zum Färben von Wolle, zur Bereitung von Tinten sowie im Rahmen der gesetzlichen Vorschriften zum Anfärben von Lebensmitteln und Kosmetika geeignet.

Beispiel 1

Zu 3000 l einer etwa 10%igen wäßrigen Lösung von 4',4''-Bis[N-äthyl-N-sulfobenzylamino-]triphenylmethan-2-sulfosaurem Natrium gibt man 55 kg Ammoniumhydrogenphosphat und heizt auf 95 °C. Dann gibt man 42 kg Braunstein in Form einer ca. 10%igen wäßrigen Anschlämmung hinzu und rührt 15 Minuten bei 95 °C.

Zur Aufarbeitung stellt man den pH-Wert durch Zugabe von 20 kg Ammoniaklösung (20%ig) auf den Wert 7 ein. Dann rührt man eine Stunde ohne Heizung nach, fügt Klärhilfsmittel hinzu und filtriert vom Niederschlag ab. Aus dem Filtrat lassen sich durch Abziehen des Wassers ca. 320 kg des weitgehend salzfreien Farbstoffes der Formel

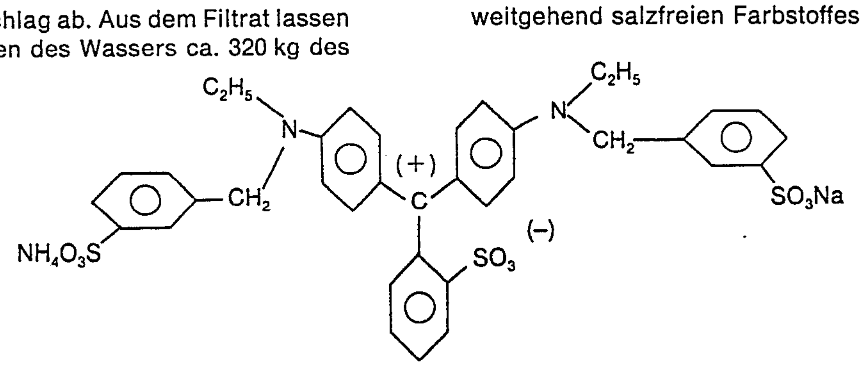

isolieren.

Beispiel 2

310 kg 4′,4″-Bis-diäthylamino-triphenylmethan-2,4-disulfosäure werden mit 61 l Ammoniaklösung (20%ig) und 49 l Natronlauge (33%ig) in Wasser zu 3000 l gelöst und auf 95 °C geheizt. Dann gibt man 230 kg Phosphorsäure 75% dazu und gleich anschließend schnellstmöglich 58 kg Braunstein in Form einer ca. 10%igen wäßrigen Anschlämmung. Man rührt 15 Minuten bei 95 °C und filtriert das ausgefallene Mangan-Ammonium-Phosphat ab. Das Filtrat wird mit 100 kg Calciumhydroxid versetzt und 4 Stunden nachgerührt. Man fügt Klärhilfsmittel zu und filtriert vom Niederschlag ab. Aus dem Filtrat lassen sich durch Abziehen des Wassers ca. 320 kg des weitgehend salzfreien Farbstoffes der Formel

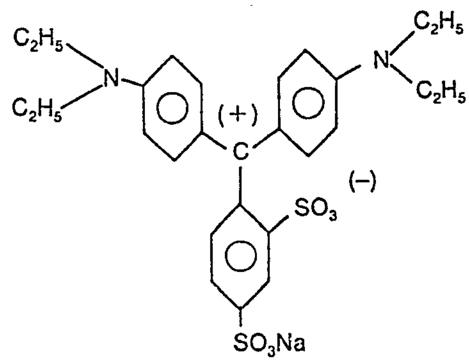

isolieren.

Beispiel 3

335 kg 4′,4″-Bis-[N-äthyl-N-benzylamino-]triphenylmethan-2,4-disulfosäure werden mit 55 l Ammoniaklösung (20%ig) und 45 l Natronlauge (33%ig) in Wasser zu 3500 l gelöst und auf 94 °C geheizt. Dann gibt man 53 kg Braunstein in Form einer ca. 10%igen wäßrigen Anschlämmung hinzu. Durch Zulaufenlassen von 230 kg Phosphorsäure (75%ig) stellt man den pH-Wert der Reaktionslösung auf 3,5. Dann wird 15 Minuten bei der angegebenen Temperatur nachgerührt, bevor das ausgefallene Mangan-Ammonium-Phosphat abfiltriert wird. Man versetzt das Filtrat mit 100 kg Calciumhydroxid und rührt 4 Stunden nach. Nach Zugabe von Klärhilfsmittel wird vom Niederschlag abfiltriert. Aus dem Filtrat lassen sich durch Abziehen des Wassers ca. 340 kg des weitgehend salzfreien Farbstoffes der Formel

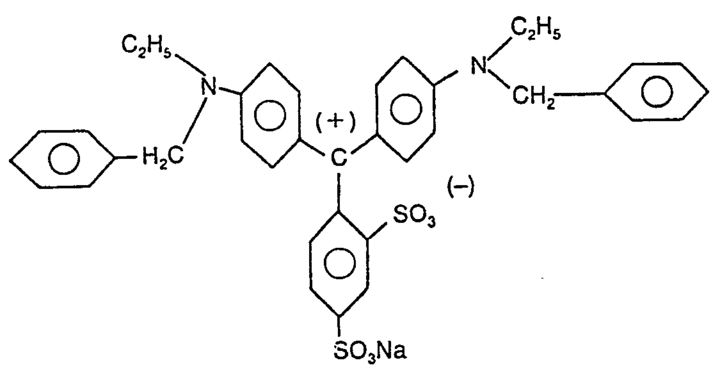

isolieren.

Der Farbstoff ergibt ebenso wie die gemäß Beispielen 1 und 2 erhältlichen Farbstoffe auf Wolle eine grünstichig blaue Färbung.

Beispiel 4

300 kg 4′,4″-Bis-diäthylamino-diphenylnaphthyl-1-methan-3,6-disulfosäure werden mit 100 l Ammoniaklösung (20%ig) in 2700 l Eiswasser gelöst. Bei 0–5 °C gibt man 52 kg Braunstein in Form einer 10%igen wäßrigen Anschlämmung hinzu und anschließend 230 kg Phosphorsäure (75%ig). Dann wird auf 70 °C hochgeheizt und vom ausgefallenen Mangan-Ammonium-Phosphat abfiltriert. Man versetzt das Filtrat mit 100 kg Calciumhydroxid und rührt 6 Stunden nach. Nach Zugabe von Klärhilfsmittel wird vom Niederschlag abfiltriert. Aus dem Filtrat lassen sich durch Abziehen des Wassers ca. 310 kg des weitgehend salzfreien Farbstoffes der Formel

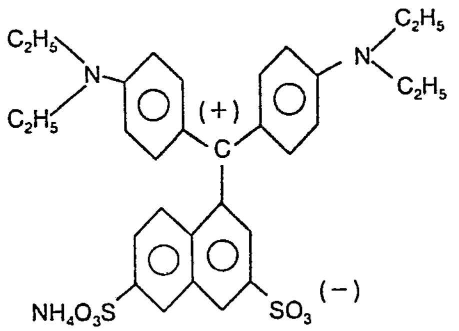

isolieren.

Der Farbstoff ergibt auf Wolle eine neutrale Grünfärbung.

Beispiel 5

280 kg 4',4''-Bis-diäthylamino-diphenyl-2,4-disulfo-1-hydroxi-triphenylmethan werden mit 100 l Ammoniaklösung (20%ig) in Wasser zu 2900 l gelöst. Man erwärmt auf 70 °C gibt 230 kg Phosphorsäure (75%ig) hinzu und gleich anschließend 52 kg Braunstein in Form einer 10%igen Anschlämmung. Man rührt 15 Minuten bei 70 °C und filtriert das ausgefallene Mangan-Ammonium-Phosphat ab. Das Filtrat wird mit 90 kg Calciumhydroxid 4 Stunden verrührt. Nach Zugabe von Klärhilfsmittel wird vom Niederschlag abfiltriert. Aus dem Filtrat lassen sich durch Abziehen des Wassers ca. 290 kg des weitgehend salzfreien Farbstoffes der Formel

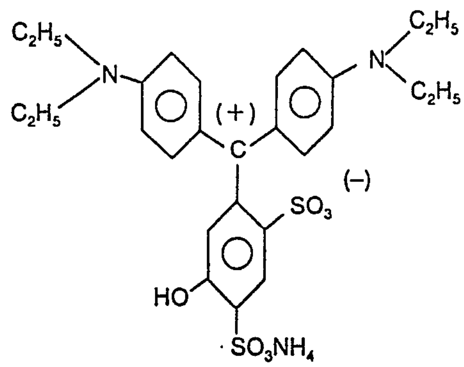

isolieren.

Der Farbstoff ergibt auf Wolle eine blaue Färbung.

Beispiel 6

335 kg 4',4''-Bis-[N-äthyl-N-benzylamino-]triphenylmethan-2,4-disulfonsäure werden mit 55 l Ammoniaklösung (20%ig) und 45 l Natronlauge (33%ig) in Wasser unter Erwärmen auf 80 °C zu 1400 l gelöst. Dazu gibt man 53 kg Braunstein in Form einer möglichst konzentrierten wäßrigen Anschlämmung. Dieses Gemisch läßt man nun in eine 70 °C warme Lösung von 230 kg Phosphorsäure (75%ig) in 1800 l Wasser laufen. Nach Aufheizen auf 95 °C wird das ausgefallene Mangan-Ammonium-Phosphat abfiltriert. Man versetzt das Filtrat mit 100 kg Calciumhydroxid und rührt 4 Stunden nach. Nach Zugabe von Klärhilfsmittel wird vom Niederschlag abfiltriert. Aus dem Filtrat lassen sich durch Abziehen des Wassers ca. 340 kg des weitgehend salzfreien Farbstoffes der Formel

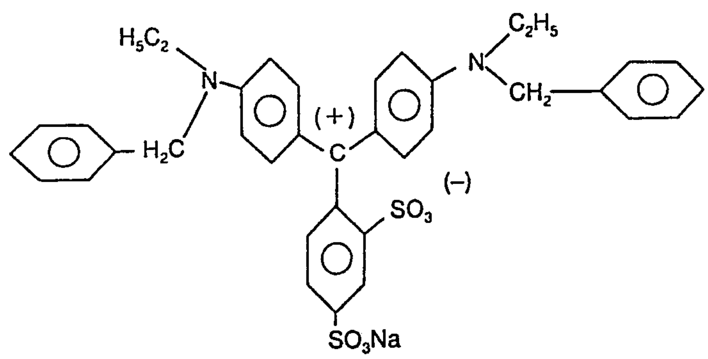

isolieren.

Der Farbstoff ergibt auf Wolle eine grünstichig blaue Färbung.

**Patentansprüche**

1. Verfahren zur Herstellung elektrolytarmer Triphenylmethanfarbstoffe der allgemeinen Formel (A)

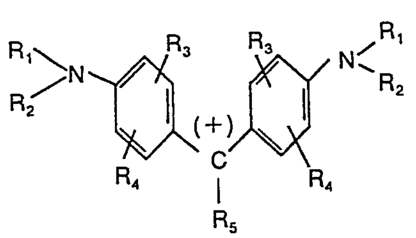

(A)

in welcher $R_1$ und $R_2$ je ein Wasserstoffatom oder eine Alkylgruppe von 1 bis 4 Kohlenstoffatomen, eine Benzyl- oder Sulfobenzylgruppe, $R_3$ und $R_4$ je ein Wasserstoffatom, eine Alkylgruppe von 1 bis 4 Kohlenstoffatomen oder eine Sulfonsäuregruppe, $R_5$ eine Phenyl-, Chlorphenyl-, Dialkylaminophenyl-, Alkyldialkylaminophenyl-, Alkoxyphenylaminophenyl-, Sulfanilido-, Sulfanilidophenyl-, Disulfobenzylaminophenyl-, Sulfophenyl-, Disulfophenyl-, Disulfohydroxyphenyl-, Sulfonaphthyl-, Disulfonaphthyl-, Hydroxidisulfonaphthyl-, Alkylphenylaminosulfonaphthyl-Gruppe bedeuten, mit der Maßgabe, daß das Farbstoffmolekül mindestens eine Sulfonsäuregruppe enthält, in Form ihrer Ammonium- oder Alkalimetallsalze, dadurch gekennzeichnet, daß man die entsprechenden Leukoverbindungen der Farbstoffe der Formel (A) mit wäßriger Ammoniaklösung oder Gemischen aus wäßriger Ammoniaklösung und wäßriger Alkalimetallhydroxidlösung löst, anschließend

a) durch Zugabe von Phosphorsäure einen pH-Wert von 1–4,5 einstellt und dann eine wäßrige Anschlämmung von Braunstein zugibt, oder

b) zunächst eine wäßrige Anschlämmung von Braunstein zugibt und dann durch Zugabe von Phosphorsäure einen pH-Wert von 1–4,5 einstellt, oder

c) die Lösung der Leukoverbindungen zusammen mit einer wäßrigen Anschlämmung von Braunstein in vorgelegte Phosphorsäure einlaufen läßt,

wobei in jedem Fall das Ammoniak in mindestens äquimolarer Menge, bezogen auf den Braunstein, zugegen sein muß, anschließend die Leukoverbindungen bei Temperaturen zwischen 0 und 100 °C zu den entsprechenden Triphenylmethanfarbstoffen oxidiert, ausgefallenes Mangan-Ammoniumphosphat abfiltriert, gegebenenfalls mit Calciumhydroxid nachfällt und das Wasser abzieht.

2. Abänderung des Verfahrens zur Herstellung elektrolytarmer Triphenylmethanfarbstoffe nach Anspruch 1, dadurch gekennzeichnet, daß man die Leukoverbindungen, die mehr als zwei Sulfonsäuregruppen im Molekül enthalten, in Wasser löst, durch Zugabe von Ammoniumdihydrogenphosphat den gewünschten pH-Wert einstellt und nach Zugabe der wäßrigen Anschlämmung des Braunsteins die Leukoverbindungen gemäß Anspruch 1 oxidiert.

**Claims**

1. Process for the preparation of triphenylmethane dyes of the general formula (A)

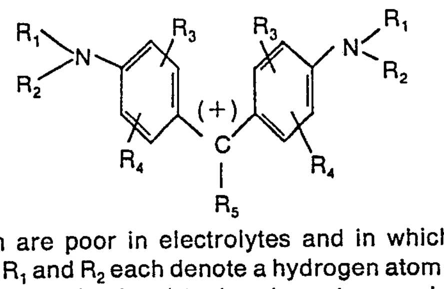 (A)

which are poor in electrolytes and in which formula $R_1$ and $R_2$ each denote a hydrogen atom or an alkyl group having 1 to 4 carbon atoms, a benzyl or a sulphobenzyl group, $R_3$ and $R_4$ each denote a hydrogen atom, an alkyl group having 1 to 4 carbon atoms or a sulphonic acid group, $R_5$ denotes a phenyl, a chlorophenyl, a dialkylaminophenyl, an alkyldialkylaminophenyl, an alkoxyphenylaminophenyl, a sulphanilido, a sulphanilidophenyl, a disulphonbenzylaminophenyl, a sulphophenyl, a disulphophenyl, a disulphohydroxyphenyl, a sulphonaphthyl, a disulphonaphthyl, a hydroxydisulphonaphthyl, an alkylphenylaminosulphonaphthyl group, it being understood that the dye molecule contains at least a sulphonic acid group, in the form of their ammonium or alkali metal salts, characterized in that the corresponding leuco compounds of the dyes of formula (A) are dissolved with aqueous ammonia solution or with mixtures of aqueous ammonia solution and aqueous alkali metal hydroxide solution, and subsequently

a) a pH of 1 to 4.5 is adjusted by adding phosphoric acid, and then adding an aqueous suspension of pyrolusite, or

b) first adding an aqueous suspension of pyrolusite and then adjusting a pH of 1 to 4.5 by adding phosphoric acid, or

c) allowing the solution of the leuco compounds to run, together with an aqueous suspension of pyrolusite, into initially placed phosphoric acid, it being

necessary in each case for the ammonia to be present in at least equimolar amounts relative to the pyrolusite, subsequently the leuco compounds are oxidised at temperatures between 0 and 100 °C to give the corresponding triphenylmethane dyes, manganese ammonium phosphate which has precipitated is filtered off, an additional precipitation is optionally effected using calcium hydroxide and the water is eliminated.

2. Modification of the process for the preparation of triphenylmethane dyes of Claim 1 which are poor in electrolytes, characterized in that the leuco compounds containing more than two sulphonic acid groups in the molecule are dissolved in water, the desired pH is adjusted by adding ammonium dihydrogenphosphate and the leuco compounds are oxidised according to Claim 1 after addition of the aqueous suspension of the pyrolusite.

**Revendications**

1. Procédé pour préparer des colorants de la série du triphénylméthane qui sont pauvres en électrolytes et qui répondent à la formule générale A:

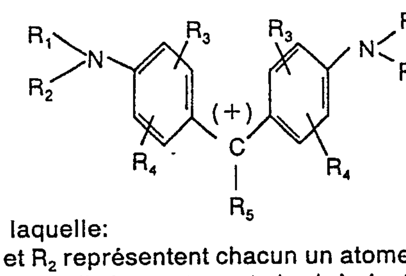 (A)

dans laquelle:

$R_1$ et $R_2$ représentent chacun un atome d'hydrogène, un alkyle contenant de 1 à 4 atomes de carbone, un benzyle ou un sulfobenzyle;

$R_3$ et $R_4$ représentent chacun un atome d'hydrogène, un alkyle contenant de 1 à 4 atomes de carbone ou un radical sulfo et

$R_5$ représente un radical phényle, chlorophényle, dialkylamino-phényle, alkyl-(dialkylamino)-phényle, alcoxy-phénylamino-phényle, sulfanilido, sulfanilido-phényle, disulfobenzylamino-phényle, sulfophényle, disulfophényle, disulfohydroxyphényle, sulfonaphtyle, disulfonaphtyle, hydroxy-disulfonaphtyle ou alkylphénylamino-sulfonaphtyle,

avec la condition que la molécule de colorant

contienne au moins un radical sulfo, sous la forme de leurs sels d'ammoniums ou de métaux alcalins, procédé caractérisé en ce qu'on dissout les leuco-dérivés correspondants des colorants de formule A avec une solution ammoniacale aqueuse ou avec des mélanges d'une solution ammoniacale aqueuse et d'une solution aqueuse d'un hydroxyde de métal alcalin, puis:

a) on ajuste le pH à une valeur comprise entre 1 et 4,5 par addition d'acide phosphorique et on ajoute ensuite une suspension aqueuse de bioxyde de manganèse, ou

b) on ajoute d'abord une suspension aqueuse de bioxyde de manganèse et on ajuste ensuite le pH à 1–4,5 par addition d'acide phosphorique, ou

c) on verse dans de l'acide phosphorique préalablement mis en place la solution des leuco-dérivés avec une suspension aqueuse de bioxyde de manganèse,

l'ammoniac devant être présent dans tous les cas en une quantité au moins équimolaire par rapport au bioxyde de manganèse, on oxyde ensuite les leuco-dérivés à des températures comprises entre 0 et 100 °C de manière à les convertir en les colorants du triphénylméthane correspondants, on élimine par filtration le phosphate d'ammonium et de manganèse qui a précipité, on effectue éventuellement une précipitation complémentaire par de l'hydroxyde de calcium et on élimine l'eau.

2. Mode d'exécution du procédé de préparation de colorants de la série du triphénylméthane pauvres en électrolytes selon la revendication 1, mode d'exécution caractérisé en ce qu'on dissout dans de l'eau les leuco-dérivés qui contiennent plus de deux radicaux sulfo dans leur molécule, on règle le pH à la valeur voulue par addition de dihydrogénophosphate d'ammonium et, après avoir ajouté la suspension aqueuse du bioxyde de manganèse, on oxyde les leuco-dérivés selon la revendication 1.